# EUROPÄISCHE PATENTANMELDUNG

(11) **EP 4 138 268 A1**
(43) Veröffentlichungstag der Anmeldung: **22.02.2023**
(21) Anmeldenummer: 22190181.2
(22) Anmeldetag: 12.08.2022
(51) Int. Cl.: H02K 1/14, H02K 11/33, H02K 21/16

(54) **STATORKÖRPER SOWIE ELEKTROMOTOR MIT DERARTIGEM STATORKÖRPER**

(30) Priorität: 12.08.2021 LU 500530
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft einen Statorkern (2), der eine Rotationsachse (9) für einen Rotor (10) definiert und der aus mehreren Statorkernsegmenten (1, 6), von denen jedes mehrere radial ausgerichtete Wickelzähne (3, 11) aufweist, besteht. Der Statorkern (2) ist derart zusammengesetzt, dass dass alle Wickelzähne (3, 11) aller Statorkernsegmente (1, 6) gerade Wickelzähne (3, 11) sind und sich in radialer Richtung erstrecken.

## Beschreibung

Die Erfindung betrifft einen Statorkern, der eine Rotationsachse für einen Rotor definiert.

Insbesondere bei Anwendungen, die zwingend auf die Funktionsfähigkeit eines Elektromotors angewiesen sind, kommen redundante Elektromotore zum Einsatz. Ein redundanter Elektromotor kann beispielsweise dadurch eine Redundanz beinhalten, dass der Stator einen ersten Satz von Spulen und einen zweiten Satz von Spulen aufweist, wobei ein und derselbe Rotor sowohl allein mittels des ersten Satzes von Spulen, als auch allein mittels des zweiten Satzes von Spulen zur Rotation angetrieben werden kann.

Beispielsweise ist aus DE 31 40 034 C2 eine kollektorlose Gleichstrommaschine bekannt, die mit einer Anzahl von voneinander unabhängigen Statorwicklungen versehen ist, die eine kontinuierliche Arbeitsfolge auch für den Fall sicherstellen, dass in einer der Wicklungen oder in dem die Wicklungen speisenden Versorgungsstromkreis ein Fehler auftritt. Die Gleichstrommaschine beinhaltet einen permanentmagnetischen Rotor mit mindestens n = 2 Polpaaren und einen Stator, dessen Statorwicklungen in n Wicklungssätze zusammengefasst sind. Durch die Wicklungssätze, die unabhängig voneinander von einer getrennten Stromversorgungseinrichtung angesteuert werden, arbeitet die Maschine auch bei Ausfall eines oder mehrerer Stromkreise weiter. Dies hat den Vorteil, dass die Funktionsfähigkeit der Gleichstrommaschine auch bei Ausfall mehrerer Wicklungen durch Unterbrechung oder Kurzschluss erhalten bleibt. Hierzu sind die Wicklungssätze in einem Abstand voneinander anzuordnen, der ausreicht, um ihre gegenseitige magnetische Beeinflussung auf einen vernachlässigbaren Wert zu reduzieren. Ein derartiger Gleichstrommotor benötigt jedoch im Vergleich zu einem nichtredundanten Elektromotor viel Bauraum.

Es ist daher die Aufgabe der vorliegenden Erfindung, einen Statorkern anzugeben, der bei einfacher Herstellbarkeit einen besonders kompakten Aufbau eines redundanten Elektromotors ermöglicht.

Die Aufgabe wird durch einen Statorkern gelöst, der eine Rotationsachse für einen Rotor definiert und der aus mehreren Statorkernsegmenten, von denen jedes mehrere radial ausgerichtete Wickelzähne aufweist, derart zusammengesetzt ist, dass keine zur Rotationsachse parallele Gerade Wickelzähne unterschiedlicher Statorkernsegmente schneidet.

Mit dem Wort "Gerade" ist eine Gerade im mathematischen Sinne gemeint, nämlich eine gerade, unendlich lange, unendlich dünne und in beide Richtungen unbegrenzte Linie.

In erfindungsgemäßer Weise wurde erkannt, dass eine besonders kompakte Bauweise ermöglicht ist, wenn der Statorkern auf besondere Art aus mehreren besonderen Statorkernsegmenten zusammengesetzt wird. Das Zusammensetzen aus mehreren Statorkernsegmenten, von denen jedes mehrere Wickelzähne aufweist, hat den ganz besonderen Vorteil, dass ein elektrisches und/oder magnetisches Übersprechen von den Spulen, die auf die Wickelzähne eines Statorkernsegment gewickelt sind, auf die Spulen, die auf die Wickelzähne eines anderen Statorkernsegments gewickelt sind, einfach, wirkungsvoll und bauraumsparend unterbunden oder zumindest wesentlich reduziert werden kann.

Im Rahmen dieser Patentanmeldung ist mit dem Begriff "Axialrichtung" die Richtung parallel oder entlang der Symmetriemittelachse des Statorkerns gemeint. Die Symmetriemittelachse des Statorkerns ist zumeist identisch zur Rotationsachse des Rotors eines Elektromotors, der den erfindungsgemäßen Statorkern aufweist. Ein axial ausgerichtetes Bauteil ist demgemäß ein Bauteil, das in der (wie oben definierten) Axialrichtung ausgerichtet ist. Ein axial ausgerichtetes Bauteil kann entlang der Symmetriemittelachse des Statorkerns oder parallel dazu ausgerichtet sein. Mit dem Begriff "Radialrichtung" ist jede Richtung senkrecht zur Symmetriemittelachse des Statorkerns gemeint. Ein radial ausgerichtetes Bauteil ist demgemäß ein Bauteil, das in Radialrichtung ausgerichtet ist. Mit dem Begriff "Umfangsrichtung" ist insbesondere die Richtung entlang der Kreislinie eines Kreises gemeint, die in einer zur Symmetriemittelachse senkrechten Ebene angeordnet ist.

Darüber hinaus ermöglicht die Erfindung ein räumliches Verschachteln der Statorkernsegmente ineinander, was, insbesondere in Axialrichtung, eine besonders bauraumsparende Bauweise ermöglicht. Insbesondere im Hinblick auf eine einfache und schnelle Zusammensetzbarkeit der Statorkernsegmente kann wenigstens eines der Statorkernsegmente als ein zusammenhängendes Stück ausgebildet sein, das als Ganzes gehandhabt werden kann. Insbesondere wenn ein Statorkernsegment aus mehreren Bauteilen besteht, ist es von besonderem Vorteil, wenn diese Bauteile derart, insbesondere fest und unbeweglich, miteinander (reib-, stoff- und/oder formschlüssig) verbunden sind, dass das Statorkernsegment als ein zusammenhängendes Stück als Ganzes gehandhabt werden kann. Vorzugsweise sind sämtliche Statorkernsegmente als zusammenhängende Stücke ausgebildet, die jeweils einzeln und als Ganzes gehandhabt werden können.

Es ist beispielsweise möglich, die Statorkernsegmente jeweils aus einem einzigen Stück Rohmaterial herzustellen. Es ist auch möglich, die Statorkernsegmente jeweils mittels eines Spritzguss-, Gieß-, Press- oder Sinterverfahrens in einem Stück herzustellen. Es ist alternativ auch möglich, die Statorkernsegmente jeweils aus mehreren Bauteilen, beispielsweise aus mehreren Elektroblechstücken, zu jeweils einem Stück zusammenzubauen, das als Ganzes gehandhabt werden kann.

Der Statorkern kann aus genau zwei Statorkernsegmenten zusammengesetzt sein. Beispielsweise ist es möglich einen erfindungsgemäßen Statorkern aus genau zwei, insbesondere gleichen, Statorkernsegmenten zusammenzusetzen, von denen jedes zwei oder mehr Wickelzähne aufweist. Bei einer ganz besonders vorteilhaften Ausführung ist der Statorkern aus genau zwei, insbesondere gleichen, Statorkernsegmenten zusammenzusetzen, von denen jedes sechs Wickelzähne aufweist. Der Statorkern dieser Ausführung weist im Ergebnis 12 Wickelzähne auf. Es ist jedoch auch möglich, den Statorkern aus einer größeren Anzahl von Statorkernsegmenten zusammenzusetzen.

Die Statorkernsegmente können vorteilhaft insbesondere derart ausgebildet sein, dass die Wickelzähne unterschiedlicher Statorkernsegmente in Umfangsrichtung abwechselnd oder, insbesondere wenn mehr als zwei Statorkernsegmente vorhanden sind, mit einer regelmäßigen Reihenfolge, insbesondere einer zyklisch wiederkehrenden Reihenfolge, angeordnet sind. Auf diese Weise ist insbesondere eine rotationssymmetrische Bauweise des Statorkerns möglich.

Bei einer besonderen Ausführung sind die Wickelzähne jedes Statorkernsegments im Umfangsrichtung gleichmäßig verteilt angeordnet. Eine solche Ausführung ermöglicht eine rotationssymmetrische Bauweise des Statorkerns. Insbesondere können die Wickelzähne der Statorkernsegmente derart verteilt angeordnet sein, dass nach dem Zusammensetzen der Statorkernsegmente jeweils zwischen zwei Wickelzähnen eines Statorkernsegments wenigstens ein Wickelzahn wenigstens eines anderen Statorkernsegments angeordnet ist.

Alternativ oder zusätzlich kann vorteilhaft vorgesehen sein, dass die Statorkernsegmente bezogen auf die Rotationsachse drehversetzt zueinander angeordnet sind. Eine solche Ausführung ermöglicht es insbesondere, die Statorkernsegmente wenigstens teilweise axial ineinander zu verschachteln. Insbesondere ist auf diese Weise vorteilhaft erreicht, die Wickelzähne eines Statorkernsegments nicht axial von den Wickelzähne eines anderen Statorkernsegments beabstandet anordnen zu müssen.

Ganz besonders robust ist ein erfindungsgemäßer Statorkern, der derart zusammengesetzt ist, dass wenigstens eine zur Rotationsachse parallele Gerade mehrere unterschiedliche Statorkernsegmente (jedoch keine Wickelzähne unterschiedlicher Statorkernsegmente) schneidet. Alternativ oder zusätzlich kann im Hinblick auf eine robuste Ausführung vorteilhaft vorgesehen sein, dass der Statorkern nicht aus lediglich in Umfangsrichtung aneinander gefügten Statorkernsegmenten zusammengesetzt ist.

Insbesondere im Hinblick auf eine symmetrische, insbesondere rotationssymmetrische, Bauweise des Statorkerns können die Statorkernsegmente des Statorkerns vorteilhaft eine gleiche Anzahl von Wickelzähnen aufweisen.

Bei einer ganz besonders vorteilhaften Ausführung sind wenigstens zwei der Statorkernsegmente gleich ausgebildet. Insbesondere kann vorteilhaft vorgesehen sein, dass alle Statorkernsegmente des Statorkerns gleich ausgebildet sind. Eine solche Ausführung ist durch die Verwendung von Gleichteilen im Hinblick auf eine kostengünstige Herstellung besonders vorteilhaft. Beispielsweise kann der Statorkern u.a. aus genau zwei gleichen Statorkernsegmenten zusammengefügt sein, die in Axialrichtung einander entgegengesetzt und bezogen auf die Rotationsachse drehversetzt zueinander angeordnet sind. Der Drehwinkel, um die die Statorkernsegmente drehversetzt sind, kann insbesondere 360 dividiert durch die Anzahl aller Wickelzähne des Statorkerns betragen.

Bei einer ganz besonders vorteilhaften Ausführung sind die Wickelzähne unterschiedlicher Statorkernsegmente gleich ausgebildet. Eine solche Ausführung ermöglicht eine symmetrische und kompakte Ausführung des Statorkerns. Insbesondere können die Wickelzähne unterschiedlicher Statorkernsegmente wenigstens axial gleich lang ausgebildet sein. In besonders vorteilhafter Weise kann insbesondere bei einer solchen Ausführung im Hinblick auf eine, insbesondere axial, kompakte Bauweise des Statorkerns vorteilhaft vorgesehen sein, dass die Wickelzähne aller Statorkernsegmente axial gleich positioniert sind.

Bei einer axial besonders kompakten Ausführung sind die Wickelzähne unterschiedlicher Statorkernsegmente axial unversetzt zueinander angeordnet. Eine solche Ausführung kann nicht nur axial besonders kompakt ausgebildet werden. Es ist darüber hinaus auch möglich, einen großen Spulenquerschnitt zu erreichen. Insbesondere hierfür kann vorteilhaft vorgesehen sein, dass die Wickelzähne unterschiedlicher Statorkernsegmente gleich ausgebildet sind.

Es ist jedoch nicht ausgeschlossen, dass die Wickelzähne unterschiedlicher Statorkernsegmente axial versetzt zueinander angeordnet sind. Beispielsweise können die Wickelzähne unterschiedlicher Statorkernsegmente in Axialrichtung überlappend angeordnet sein. Es ist auch möglich den erfindungsgemäßen Statorkern derart auszubilden, dass die Wickelzähne unterschiedlicher Statorkernsegmente axial voneinander beabstandet sind. Auch eine solche Ausführung kann axial bauraumsparend ausgebildet sein.

Vorzugsweise sind die Statorkernsegmente aus einem paramagnetischen oder ferromagnetischen Material hergestellt. Insbesondere können die Statorkernsegmente aus Elektroblech hergestellt sein. Bei einer solchen Ausführung kann vorteilhaft ausgenutzt werden, dass Elektroblech einfach verfügbar und einfach verarbeitbar ist. Bei einer besonders vorteilhaften Ausführung weist wenigstens eines der Statorkernsegmente mehrere Schichten von Elektroblech auf.

Bei einer ganz besonders vorteilhaften Ausführung sind die Statorkernsegmente derart angeordnet, dass der Übertrag eines magnetischen Flusses von einem Statorkernsegment zu einem anderen Statorkernsegment zumindest reduziert ist. Dies kann beispielsweise dadurch realisiert sein, dass die Statorkernsegmente voneinander beabstandet sind. Weitgehend unabhängig von der Größe des Statorkerns kann es vorteilhaft ausreichend sein, wenn der Abstand der Statorkernsegmente überall wenigstens 0,5 mm, insbesondere wenigstens 1 mm, beträgt. Insbesondere kann der Abstand im Bereich von 0,5 mm bis 3 mm oder im Bereich von 1 mm bis 3 mm liegen. Ganz allgemein kann vorteilhaft vorgesehen sein, dass der Abstand zwischen den Statorkernsegmenten im Bereich von 1/300 bis 1/50 der axialen Länge des Statorkerns und/oder im Bereich von 1/300 bis 1/50 des Durchmessers des Statorkerns liegt. Dies ist insbesondere vorteilhaft, wenn die axiale Länge des Statorkerns im Bereich von 50 mm bis 500 mm liegt und/oder wenn der Durchmessers des Statorkerns im Bereich von 50 mm bis 500 mm liegt.

Insbesondere kann zwischen den Statorkernsegmenten eine Trennvorrichtung angeordnet sein. Die Trennvorrichtung kann vorteilhaft als Trennschicht ausgebildet sein oder mehrere Trennschichten aufweisen. Alternativ oder zusätzlich kann vorteilhaft vorgesehen sein, dass die Trennvorrichtung oder wenigstens das Material eines Teils der Trennvorrichtung ein elektrisch nichtleitendes beinhaltet. Alternativ oder zusätzlich kann das Material der Trennvorrichtung oder wenigstens das Material eines Teils der Trennvorrichtung diamagnetisch oder paramagnetisch sein. Ganz besonders vorteilhaft ist eine Trennvorrichtung, die einen Schichtaufbau aus einem elektrisch nichtleitenden und einem ferromagnetischen oder paramagnetischen Material aufweist. Insbesondere kann der Schichtaufbau aus einer Vielzahl von Schichten unterschiedlicher Materialien bestehen, die in Schichtungsrichtung abwechselnd angeordnet sind. Insbesondere kann eine der genannten Schichten aus Elektroisolierpapier gebildet sein.

Ganz allgemein kann die Trennvorrichtung zumindest teilweise aus Elektroisolierpapier gebildet sein. Das Elektroisolierpapier kann vorteilhaft eine Dicke im Bereich von 0,5 mm bis 3 mm oder eine Dicke von 1 mm aufweisen.

Die Trennvorrichtung kann vorteilhaft eine Dicke im Bereich von wenigsten 0,5 mm, insbesondere von wenigstens 1 mm aufweist. Ganz allgemein kann vorteilhaft vorgesehen sein, dass die Dicke des Trennmaterials im Bereich von 1/300 bis 1/50 der axialen Länge des Statorkern und/oder im Bereich von 1/300 bis 1/50 des Durchmessers des Statorkerns liegt. Ganz allgemein kann vorteilhaft vorgesehen sein, dass die Dicke des Elektroisolierpapiers im Bereich von 1/300 bis 1/50 der axialen Länge des Statorkerns und/oder im Bereich von 1/300 bis 1/50 des Durchmessers des Statorkerns liegt. Dies ist insbesondere vorteilhaft, wenn die axiale Länge des Statorkerns im Bereich von 50 mm bis 500 mm liegt und/oder wenn der Durchmessers des Statorkerns im Bereich von 50 mm bis 500 mm liegt.

Bei einer ganz besonders vorteilhaften Ausführung ist die Trennvorrichtung als Abstandhalter ausgebildet, an dem zumindest zwei Statorkernsegmente unmittelbar anliegen. Eine solche Ausführung hat den ganz besonderen Vorteil, dass die einzelnen Bauteile sehr einfach zusammengefügt werden können.

Bei einer besonderen Ausführung weist die Trennvorrichtung wenigstens ein Kunststoffspritzgussteil auf. Insbesondere im Hinblick auf eine kompakte Bauweise und ein effizientes verhindern eines Übersprechens des magnetischen Flusses von einem Statorkernsegment auf ein anderes Statorkernsegment kann vorteilhaft vorgesehen sein, dass das Kunststoffspritzgussteil und wenigstens eines der Statorkernsegmente formschlüssig ineinander greifen.

Die Trennvorrichtung kann vorteilhaft eine Durchschlagsfestigkeit im Bereich von 10 kV/ mm bis 40 kV/mm, insbesondere im Bereich von 18 kV/mm bis 35 kV/mm aufweisen. Es hat sich gezeigt, dass ein Übersprechen von den Spulen, die auf die Wickelzähne eines Statorkernsegment gewickelt sind, auf die Spulen, die auf die Wickelzähne eines anderen Statorkernsegments gewickelt sind, umso geringer ist, je höher die Durchschlagsfestigkeit des Materials der Trennvorrichtung ist.

Alternativ oder zusätzlich kann vorteilhaft vorgesehen sein, dass die Trennvorrichtung eine Dauertemperaturbeständigkeit von wenigstens 200 °C, insbesondere von wenigstens 220 °C, aufweist. Insbesondere kann die Trennvorrichtung vorteilhaft aus einem Material gebildet sein, welches bei Temperaturen bis 400 °C zumindest für einen Zeitraum von 1 Stunde, insbesondere für einen Zeitraum von 4 h, eine Durchschlagfestigkeit von wenigstens 10 kV/mm aufweist.

Besonders vorteilhaft ist eine Ausführung, bei der der Statorkern insgesamt eine Anzahl von Wickelzähnen aufweist, die ohne Rest durch 2 und/oder durch 3 teilbar ist. Bei einer solchen Ausführung ist eine rotationssymmetrische Anordnung der Wickelzähne einfach realisierbar. Insbesondere kann vorteilhaft vorgesehen sein, dass der Statorkern genau 4 oder 6 oder 8 oder 9 oder 12 Wickelzähne aufweist.

Bei einer ganz besonders vorteilhaften Ausführung weist jedes Statorkernsegment ein Trägerelement auf, an dem seine Wickelzähne angeordnet sind. Das Trägerelement kann insbesondere als Ring ausgebildet sein. Insbesondere können die Statorkernsegmente derart ausgebildet sein, dass die Trägerelemente des zusammengesetzten Statorkerns in Axialrichtung gestapelt angeordnet sind. Eine solche Ausführung ist besonders kompakt und stabil. Außerdem kann eine solche Ausführung einfach zusammengesetzt werden. Insbesondere hierfür können die Trägerelemente vorteilhaft gleich ausgebildet sein.

Insbesondere kann im Hinblick auf einen kompakten Aufbau vorteilhaft vorgesehen sein, dass das Trägerelement eines Statorkernsegments axial mit seinen Wickelzähnen und/oder mit den Wickelzähnen eines anderen Statorkernsegments überlappend angeordnet ist.

Insbesondere kann vorteilhaft vorgesehen sein, dass der Statorkern dadurch, insbesondere ausschließlich dadurch, zusammengehalten ist, dass die Trägerelemente und/oder die Trennvorrichtung(en) mittels eigenen und/oder zusätzlichen Befestigungselementen miteinander verbunden werden. Besonders vorteilhaft ist es, wenn die Trägerelemente Befestigungselemente aufweisen. Beispielsweise können die Trägerelemente jeweils wenigstens eine Bohrung, insbesondere eine Gewindebohrung, aufweisen.

Der erfindungsgemäße Statorkern kann in der Weise hergestellt werden, dass zunächst die Statorkernsegmente ggf. samt der Trennvorrichtung zusammengefügt werden und danach ein Bewickeln der Wickelzähne erfolgt. Diese Vorgehensweise ist besonders einfach realisierbar. Es ist allerdings auch möglich, zunächst die Wickelzähne mit Wickeldraht zu bewickeln und danach die Statorkernsegmente ggf. samt der Trennvorrichtung zusammenzufügen. Auf diese Weise kann ein besonders hoher Füllfaktor erreicht werden, weil auch solche Bereiche zwischen den Wickelzähnen mit Wickeldraht bewickelt werden können, die bei einem zusammengesetzten Statorkern mit einem Nadelwickler nicht mehr zugänglich wären.

Bei einer ganz besonders vorteilhaften Ausführung umgibt der Statorkern einen Aufnahmeraum für einen Rotor. Alternativ oder zusätzlich kann vorteilhaft vorgesehen sein, dass wenigstens eines der Statorkernsegmente einen Aufnahmeraum für einen Rotor in Umfangsrichtung vollständig umschließt. Eine solche Ausführung ist besonders vorteilhaft, um einen als Innenläufer ausgebildeten Elektromotor zu bilden. Der als Innenläufer ausgebildete Elektromotor kann insbesondere einen Rotor mit Permanentmagneten aufweisen, der in dem Aufnahmeraum angeordnet ist.

Alternativ kann der Stator auch für einen als Ausläufer ausgebildeten Elektromotor ausgebildet sein, insbesondere derart, dass sich der Stator im Inneren befindet und von Rotor umgeben ist.

Ganz besonders vorteilhaft ist ein Stator, der einen erfindungsgemäßen Statorkern aufweist. Ein solcher Stator kann besonders kompakt ausgebildet sein, während er gleichzeitig die Möglichkeit bietet, Bestandteil eines redundanten Elektromotors zu sein.

Vorzugsweise sind die Wickelzähne jedes Statorkernsegments mit einer Spule bewickelt, wobei die Spulen unterschiedlicher Statorkernsegmente in unterschiedliche, insbesondere voneinander unabhängige, elektrische und/oder elektronische Schaltungen, integriert sind. insbesondere können die Schaltungen als Sternschaltungen oder Dreiecksschaltungen ausgebildet sein, was es ermöglicht, einen mit dem Statorkern versehenen Elektromotor mit den Spulen eines einzigen der Statorkernsegmente alleine oder mit den Spulen mehrerer, insbesondere aller, Statorkernsegmente gemeinsam als Drehstrommotor zu betreiben.

Ganz besonders vorteilhaft ist ein Elektromotor, insbesondere ein Wechsel- oder Drehstrommotor, der einen erfindungsgemäßen Statorkern oder einen erfindungsgemäßen Stator aufweist. Der Elektromotor kann vorteilhaft einen einzigen Rotor aufweisen, der rotierbar in dem Statorkern angeordnet ist. Der Rotor kann mehrere, vorzugsweise in Umfangsrichtung symmetrisch, angeordneten Permanentmagnete aufweisen.

Der Elektromotor kann vorteilhaft derart ausgebildet sein, dass der Rotor durch ausschließliches Bestromen der Spulen eines Teils der Statorkernsegmente zur Rotation antreibbar ist. Das Bestromen kann insbesondere beinhalten, dass unterschiedliche Spulen desselben Statorkernsegments an jeweils eine der Leiterspannungsphasen eines Drehstromsystems angeschlossen sind, um ein Drehfeld zu erzeugen.

Insbesondere kann der Elektromotor derart ausgebildet sein, dass der Rotor durch ausschließliches Bestromen der Spulen eines einzigen Statorkernsegments zur Rotation antreibbar ist. Eine solche Ausführung hat den ganz besonderen Vorteil, dass der Elektromotor unter Verwendung der Spulen eines der Statorkernsegmente weiter betrieben werden kann, wenn bei den Spulen eines anderen Statorkernsegments (oder bei den Spulen aller anderen Statorkernsegmente, falls insgesamt mehr als zwei Statorkernsegmente mit jeweils eigenen Spulen vorhanden sind) und/oder bei deren Antriebselektronik bzw. Subantriebselektronik ein Fehler auftritt.

Zusätzlich kann der Elektromotor vorteilhaft derart ausgebildet sein, dass der Rotor durch simultanes Bestromen der Spulen mehrerer Statorkernsegmente, insbesondere aller Statorkernsegmente, zur Rotation antreibbar ist. Ein simultanes Bestromen der Spulen mehrerer Statorkernsegmente, insbesondere aller Statorkernsegmente, hat den Vorteil, dass der Elektromotor eine höhere Ausgangsleistung aufweist.

Ganz besonders vorteilhaft ist ein Antriebssystem, das einen erfindungsgemäßen Elektromotor und wenigstens eine Antriebselektronik aufweist, die dazu ausgebildet ist, die Spulen wenigstens eines Statorkernsegments, insbesondere alle Spulen aller Statorkernsegmente, zu bestromen. Die Antriebselektronik kann mehrere, insbesondere redundante, Subantriebselektroniken beinhalten, von denen jede dazu ausgebildet ist, die Spulen wenigstens eines Statorkernsegments zu bestromen. Die Antriebselektronik kann insbesondere dazu ausgebildet sein, eine Kenngröße des Elektromotors, insbesondere die Drehzahl und/oder das Drehmoment des Elektromotors, zu steuern oder zu regeln.

Es ist insbesondere vorteilhaft auch möglich, dass die Antriebselektronik mehrere Subantriebselektroniken beinhaltet, wobei jeweils den Spulen eines Statorkernsegments eine eigene der Subantriebselektroniken zugeordnet ist. Insbesondere für ein simultanes Bestromen der Spulen mehrerer Statorkernsegmente, insbesondere aller Statorkernsegmente, kann vorteilhaft vorgesehen sein, dass die Subantriebselektroniken miteinander synchronisierbar sind. Hierzu kann die Antriebselektronik eine Synchronisierungsschaltung beinhalten. Auch bei einer solchen Ausführung ist jedoch vorteilhaft vorgesehen, dass der Elektromotor unter Verwendung der Spulen nur eines Statorkernsegmente weiter betrieben werden kann, wenn bei den Spulen eines anderen Statorkernsegments (oder bei den Spulen aller anderen Statorkernsegmente, falls insgesamt mehr als zwei Statorkernsegmente mit jeweils eigenen Spulen vorhanden sind) und/oder bei der Subantriebselektronik eines anderen Statorkernsegments ein Fehler auftritt.

Insbesondere kann vorteilhaft vorgesehen sein, dass die Antriebselektronik den Elektromotor mittels Pulsbreitenmodulation steuert oder regelt. Eine solche Ausführung erlaubt eine präzise Steuerung bzw. Regelung der Drehzahl und/oder des Drehmomentes. Bei einer Steuerung bzw. Regelung eines Elektromotors mittels Pulsbreitenmodulation sind insbesondere das Tastverhältnis und die Trägerfrequenz von besonderer Relevanz. Insbesondere kann vorteilhaft vorgesehen sein, dass die Antriebselektronik den Elektromotor mittels Pulsbreitenmodulation mit einer Trägerfrequenz im Bereich von 10 kHz bis 150 kHz, insbesondere im Bereich von 50 kHz bis 100 kHz steuert oder regelt. Diese Trägerfrequenzen haben insbesondere den ganz besonderen Vorteil, dass ein hoher Wirkungsgrad und/oder hohe Drehzahlen realisiert werden können. Darüber hinaus besteht ein besonderer Vorteil dieser vergleichsweise hohen Trägerfrequenzen darin, dass kompakte Abmessungen möglich sind, ohne dass es bei hohen Stromstärken zu einer übermäßigen Erwärmung kommt. In ganz besonders vorteilhafter Weise sind durch die genannten Trägerfrequenzen außerdem laute Motorengeräusche vermieden oder zumindest in einen für einen Menschen nicht hörbaren Frequenzbereich verschoben.

Die vorliegende Erfindung löst diesbezüglich in ganz besonders vorteilhafter Weise einen Zielkonflikt. Im Hinblick auf die Vermeidung eines elektrischen und/oder magnetischen Übersprechens von den Spulen, die auf die Wickelzähne eines Statorkernsegment gewickelt sind, auf die Spulen, die auf die Wickelzähne eines anderen Statorkernsegments gewickelt sind, wären nämlich eigentlich möglichst niedrige Trägerfrequenzen vorteilhaft.

Der erfindungsgemäße Elektromotor und das Antriebssystem können ganz besonders vorteilhaft in Systemen zur Anwendung kommen, in denen wenig Bauraum zur Verfügung steht, aber dennoch ein zuverlässiger Antrieb einer Komponente erforderlich ist. Insbesondere ist eine Verwendung in sicherheitsrelevanten Systemen, insbesondere bei sicherheitsrelevanten Fahrzeugsystemen, wie beispielsweise bei Lenkungen und aktiven Fahrwerken, besonders vorteilhaft.

Insoweit ist eine Lenkung, insbesondere eine PKW-Lenkung oder eine LKW-Lenkung, besonders vorteilhaft, die wenigstens einen erfindungsgemäßen Elektromotor oder ein erfindungsgemäßes Antriebssystem aufweist. Bei der Lenkung kann es sich beispielsweise um eine Servolenkung und/oder eine Überlagerungslenkung und/oder eine Steer-by-Wire-Lenkung handeln. Die Verwendung eines erfindungsgemäßen Elektromotors oder eines erfindungsgemäßen Antriebssystems in einer Lenkung ist besonders vorteilhaft, weil in einem Fahrzeug zumeist wenig Bauraum zur Verfügung steht, aber dennoch ein sehr hohes Sicherheitsniveau erforderlich ist, um ein plötzliches Totalversagen der Lenkung ausschließen zu können.

Ganz besonders vorteilhaft ist auch ein Fahrwerk, das wenigstens einen erfindungsgemäßen Elektromotor oder ein erfindungsgemäßes Antriebssystem aufweist. Bei dem Fahrwerk kann es sich insbesondere um ein aktives Fahrwerk für ein Kraftfahrzeug handeln. Das aktive Fahrwerk kann insbesondere zur Nickstabilisation und/oder zur Wankstabilisation und/oder zur Höhenverstellung einer Fahrzeugkarosserie relativ zu den Rädern ausgebildet sein. Die Verwendung eines erfindungsgemäßen Elektromotors oder eines erfindungsgemäßen Antriebssystems in einem aktiven Fahrwerk ist besonders vorteilhaft, weil in einem Fahrzeug zumeist wenig Bauraum zur Verfügung steht, aber dennoch ein sehr hohes Sicherheitsniveau erforderlich ist, um ein plötzliches und gefährliches Totalversagen während der Fahrt ausschließen zu können.

Ganz besonders vorteilhaft ist auch ein Roboter, insbesondere Industrieroboter, der wenigstens einen erfindungsgemäßen Elektromotor oder ein erfindungsgemäßes Antriebssystem beinhaltet. Insbesondere können der erfindungsgemäße Elektromotor oder das erfindungsgemäße Antriebssystem vorteilhaft Bestandteil eines Robotergelenks sein. Das Robotergelenk kann insbesondere in der Weise ausgebildet sein, dass es zwei Träger eines Roboterarms beweglich, insbesondere drehbeweglich oder schwenkbeweglich, miteinander verbindet, wobei eine Bewegung der Träger relativ zueinander mittels des erfindungsgemäßen Elektromotors oder des erfindungsgemäßen Antriebssystems gesteuert oder geregelt werden kann. Die Verwendung eines erfindungsgemäßen Elektromotors oder eines erfindungsgemäßen Antriebssystems in einem Roboter bzw. Robotergelenk ist besonders vorteilhaft, weil in einem Roboter zumeist wenig Bauraum zur Verfügung steht, aber dennoch ein sehr hohes Sicherheitsniveau erforderlich ist, um ein plötzliches und gefährliches Totalversagen, insbesondere während der Ausführung einer Bewegung, zuverlässig ausschließen zu können.

Ganz besonders vorteilhaft ist auch ein Flugzeug, insbesondere ein Fly-by-Wire-Flugzeug, das wenigstens einen erfindungsgemäßen Elektromotor oder ein erfindungsgemäßes Antriebssystem beinhaltet. Der erfindungsgemäße Elektromotor oder das erfindungsgemäße Antriebssystem können insbesondere zur Steuerung oder Regelung der Stellung eines Ruders oder einer Klappe zum Einsatz kommen. Die Verwendung eines erfindungsgemäßen Elektromotors oder eines erfindungsgemäßen Antriebssystems in einem Flugzeug ist besonders vorteilhaft, weil in einem Flugzeug zumeist wenig Bauraum zur Verfügung steht, aber dennoch ein sehr hohes Sicherheitsniveau erforderlich ist, um ein plötzliches und gefährliches Totalversagen, insbesondere während des Fluges, zuverlässig ausschließen zu können.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Statorkernsegment eines Ausführungsbeispiels eines erfindungsgemäßen Statorkerns in einer perspektivischen Ansicht,
- Fig. 2: das Statorkernsegment in der Draufsicht entlang der Axialrichtung,
- Fig. 3: das Statorkernsegment in einer Schnittdarstellung bezüglich der Schnittebene D-D,
- Fig. 4: das Statorkernsegment in einer Schnittdarstellung bezüglich der Schnittebene E-E,
- Fig. 5: eine Trennvorrichtung des Ausführungsbeispiels eines erfindungsgemäßen Statorkerns in einer perspektivischen Ansicht,
- Fig. 6: das Ausführungsbeispiel des erfindungsgemäßen Statorkerns in einer perspektivischen Ansicht,
- Fig. 7: das Ausführungsbeispiel des erfindungsgemäßen Statorkerns in der Draufsicht entlang der Axialrichtung,
- Fig. 8: das Ausführungsbeispiel des erfindungsgemäßen Statorkerns in einer Schnittdarstellung bezüglich der Schnittebene A-A,
- Fig. 9: das Ausführungsbeispiel des erfindungsgemäßen Statorkerns in einer Schnittdarstellung bezüglich der Schnittebene B-B,
- Fig. 10: das Ausführungsbeispiel des erfindungsgemäßen Statorkerns zusammen mit einem schematisch dargestellten Rotor.

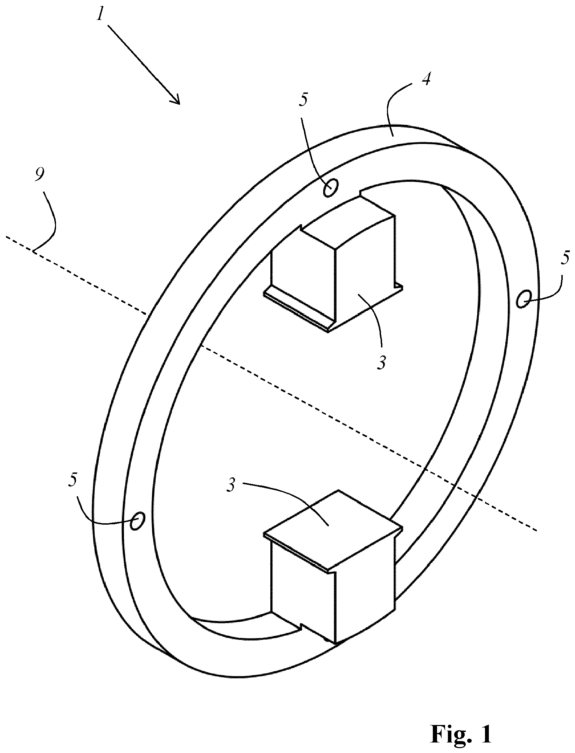

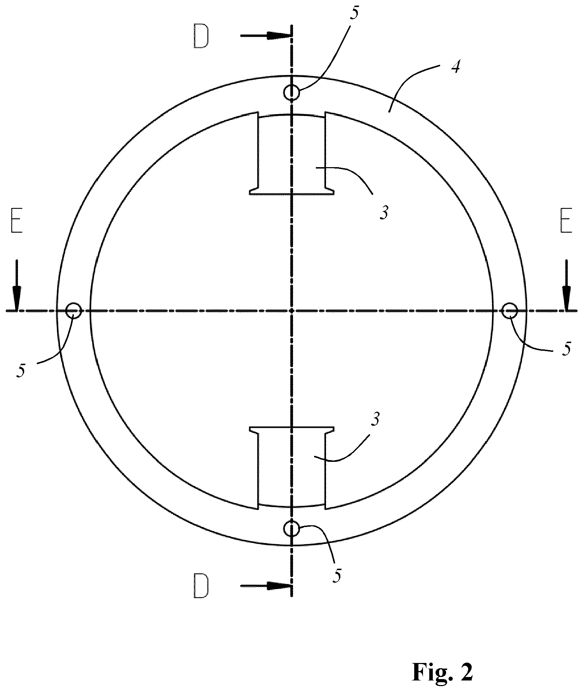

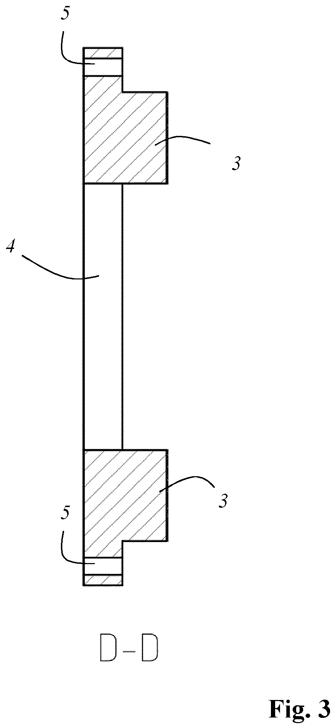

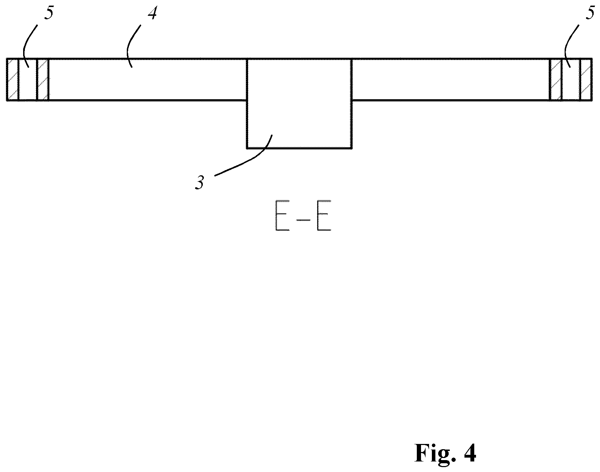

Die Figuren 1 bis 4 zeigen ein Statorkernsegment 1 eines Ausführungsbeispiels eines erfindungsgemäßen Statorkerns 2. Das Statorkernsegment 1 weist zwei radial ausgerichtete Wickelzähne 3 auf, auf die jeweils wenigstens eine Spule gewickelt werden kann. Das Statorkernsegment 1 weist ein Trägerelement 4 auf, an dem seine Wickelzähne 3 angeordnet sind. Das Trägerelement 4 ist als Ring ausgebildet. Die Wickelzähne 3 sind axial länger als das Trägerelement 4. Konkret sind die Wickelzähne 3 axial etwas mehr als doppelt so lang wie das als Ring ausgebildete Trägerelement 4.

Das Trägerelement 4 weist mehrere Befestigungselemente 5 auf, die als Durchgangsbohrungen ausgebildet sind und die dazu dienen, das Statorkernsegment 1 mit einem weiteren Statorkernsegment 6 und mit einer Trennvorrichtung 7 zu verbinden.

Das dargestellte Statorkernsegment 1 könnte ohne weiteres auch komplizierter ausgebildet sein und/oder eine größere Anzahl von Wickelzähnen 3 aufweisen. Allerdings ist das dargestellte Ausführungsbeispiel besonders übersichtlich, um eine Grundidee der Erfindung zu illustrieren.

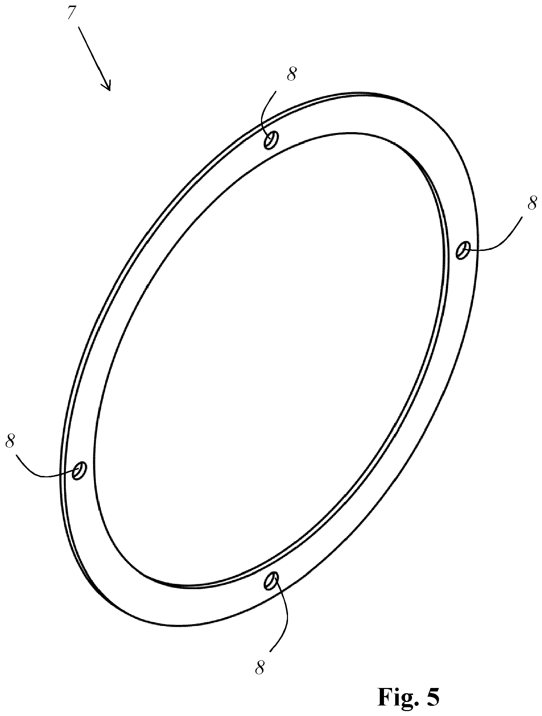

Figur 5 zeigt eine Trennvorrichtung 7 des Ausführungsbeispiels eines erfindungsgemäßen Statorkerns 2 in einer perspektivischen Ansicht. Die Trennvorrichtung 7 weist mehrere Durchgangsöffnungen 8 auf, die dazu dienen, die Trennvorrichtung 7 mit dem Statorkernsegment 1 und dem weiteren Statorkernsegment 6 zu verbinden. Die Trennvorrichtung 7 ist als Ring ausgebildet. Insbesondere kann die Trennvorrichtung 7 bei einer einfachen Ausführung aus Elektroisolierpapier gebildet sein.

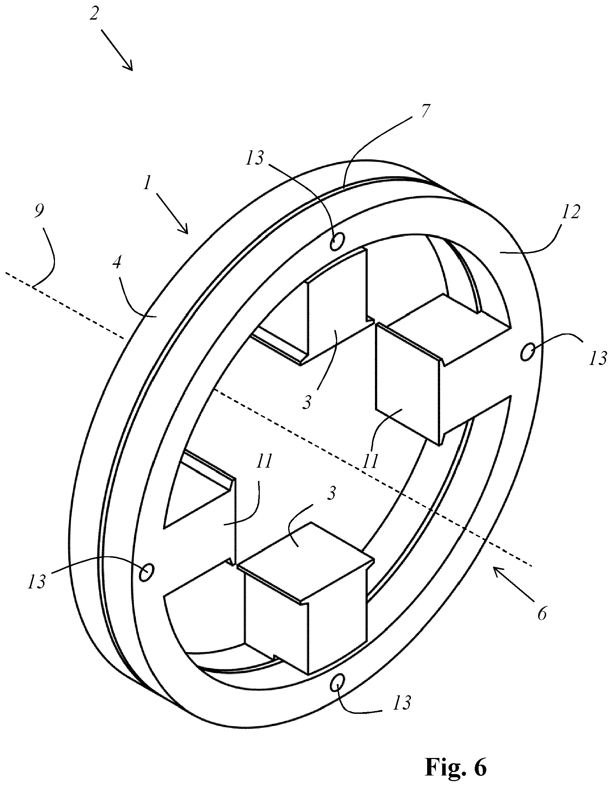

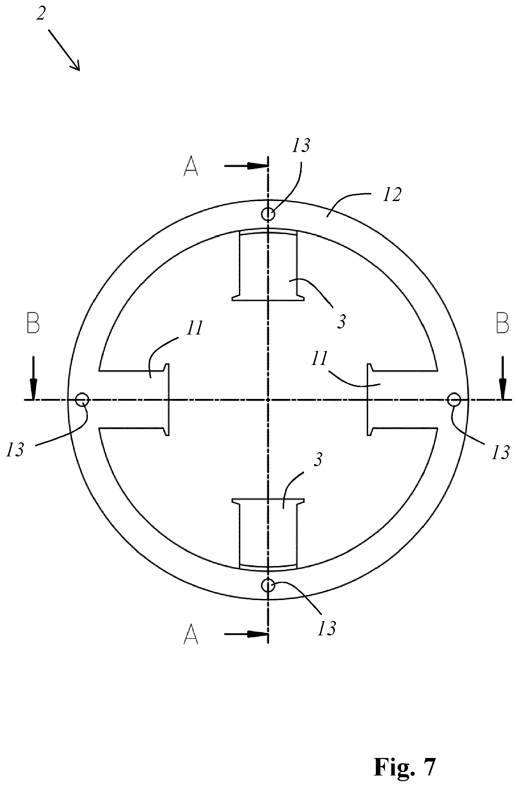

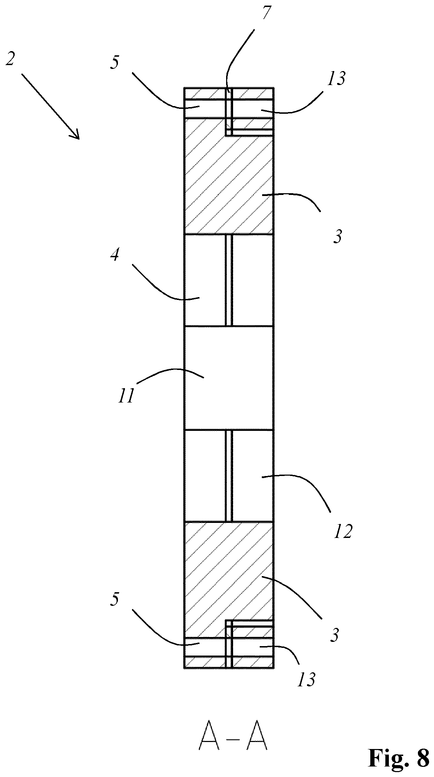

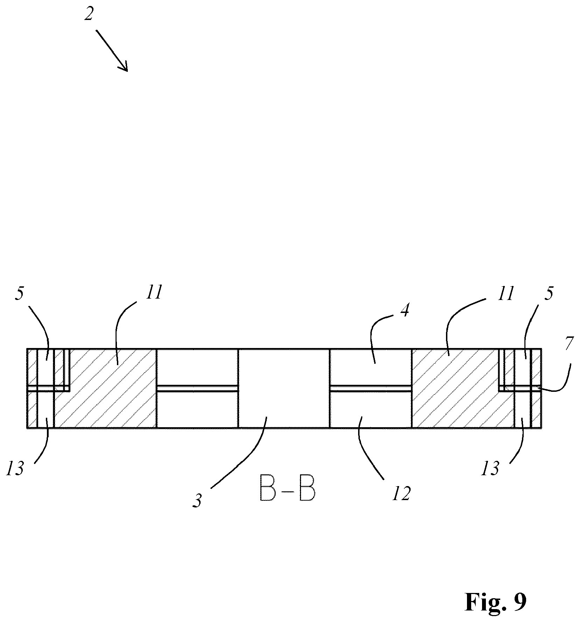

Die Figuren 6 bis 9 zeigen das Ausführungsbeispiel des erfindungsgemäßen Statorkerns 2 in verschiedenen Darstellungen. Der Statorkern 2 beinhaltet das in den Figuren 1 bis 4 dargestellte Statorkernsegment 1 und ein weiteres Statorkernsegment 6, das gleich ausgebildet ist wie das in den Figuren 1 bis 4 dargestellte Statorkernsegment 1. Das Statorkernsegment 1 und das weitere Statorkernsegment 6 sind einander entgegengesetzt ausgerichtet und bezogen auf die Rotationsachse 9 um 90 Grad drehversetzt zueinander angeordnet.

Das weitere Statorkernsegment 6 ist, wie bereits erwähnt, zu dem in den Figuren 1 bis 4 dargestellte Statorkernsegment 1 gleich ausgebildet. Das weitere Statorkernsegment 6 weist daher zwei radial ausgerichtete weitere Wickelzähne 11 auf, auf die jeweils wenigstens eine Spule gewickelt werden kann. Das weitere Statorkernsegment 6 weist außerdem ein weiteres Trägerelement 12 auf, an dem die weiteren Wickelzähne 11 angeordnet sind. Das weitere Trägerelement 12 ist als Ring ausgebildet. Die weiteren Wickelzähne 11 sind axial länger als das weitere Trägerelement 12. Konkret sind die weiteren Wickelzähne 11 axial etwas mehr als doppelt so lang wie das als Ring ausgebildete weitere Trägerelement 12.

Die Trennvorrichtung 7 ist axial zwischen dem Statorkernsegment 1 und dem weiteren Statorkernsegment 6 angeordnet.

Das weitere Trägerelement 12 weist mehrere weitere Befestigungselemente 13 auf, die als Durchgangsbohrungen ausgebildet sind und die dazu dienen, das weitere Statorkernsegment 6 mit dem Statorkernsegment 1 und mit der Trennvorrichtung 7 zu verbinden. Die als Durchgangsbohrungen ausgebildeten Befestigungselemente 5 und die als Durchgangsbohrungen ausgebildeten weiteren Befestigungselemente 13 sowie die Durchgangsöffnungen 8 fluchten miteinander, so dass sie mittels eines zusätzlichen (nicht dargestellten) Befestigungselements, beispielsweise mittels hindurch verlaufenden Schrauben oder mit hindurch verlaufenden Bolzen, miteinander verbunden werden können.

Die axiale Mittelachse des Statorkerns 1 definiert eine Rotationsachse 9 für einen (in den Figuren 1 bis 9 nicht dargestellten) Rotor 10.

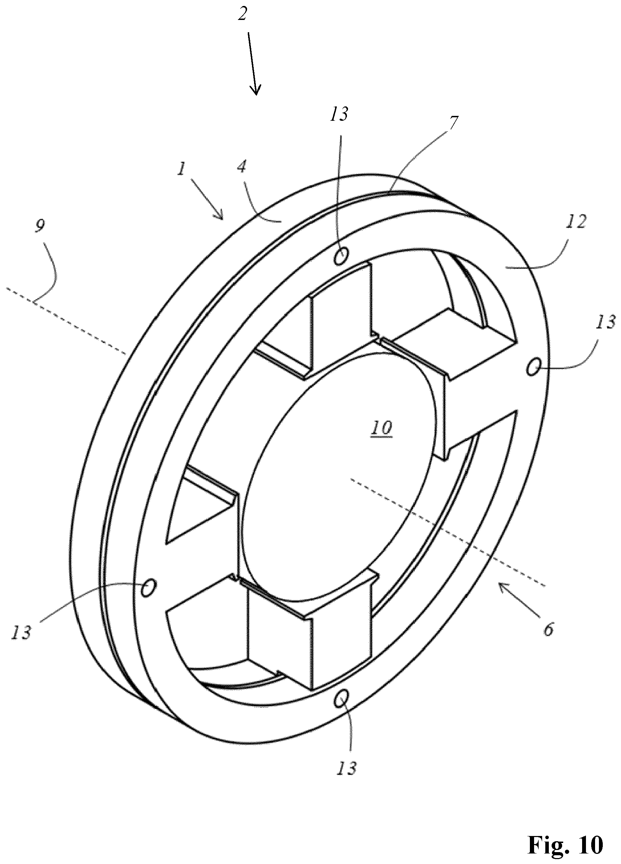

Figur 10 zeigt das Ausführungsbeispiel des erfindungsgemäßen Statorkerns 1 ganz schematisch zusammen mit einem Rotor 10, der (beispielsweis an einem nicht dargestellten Gehäuse des Elektromotors, der den Statorkern beinhaltet) um die Rotationsachse 9 rotierbar gelagert ist und der insbesondere mehrere (nicht dargestellte) Permanentmagnete aufweisen kann. Die schematische Figur 10 dient lediglich der Veranschaulichung der Anordnung des Rotors 10 relativ zu dem Statorkern 2 und nicht dazu, weitere Details eines Elektromotors darzustellen.

### Bezugszeichenliste:

- 1: Statorkernsegment
- 2: Statorkern
- 3: Wickelzähne
- 4: Trägerelement
- 5: Befestigungselement
- 6: weiteres Statorkernsegment
- 7: Trennvorrichtung
- 8: Durchgangsöffnung
- 9: Rotationsachse
- 10: Rotor
- 11: weitere Wickelzähne
- 12: weiteres Trägerelement
- 13: weiteres Befestigungselement

## Patentansprüche

1. Statorkern (2), der eine Rotationsachse (9) für einen Rotor (10) definiert und der aus mehreren Statorkernsegmenten (1, 6), von denen jedes mehrere radial ausgerichtete Wickelzähne (3, 11) aufweist, derart zusammengesetzt ist, dass keine zur Rotationsachse (9) parallele Gerade Wickelzähne (3, 11) unterschiedlicher Statorkernsegmente (1, 6) schneidet.

2. Statorkern (2) nach Anspruch 1, **dadurch gekennzeichnet, dass**
a. die Wickelzähne (3, 11) jedes Statorkernsegments (1, 6) im Umfangsrichtung gleichmäßig verteilt angeordnet sind, und/oder dass
b. die Statorkernsegmente (1, 6) bezogen auf die Rotationsachse (9) drehversetzt zueinander angeordnet sind, und/oder dass
c. die Statorkernsegmente (1, 6) eine gleiche Anzahl von Wickelzähnen (3, 11) aufweisen.

3. Statorkern (2) nach Anspruch 1 oder 2, **dadurch gekennzeichnet, dass**
a. die Wickelzähne (3, 11) unterschiedlicher Statorkernsegmente (1, 6) gleich ausgebildet sind, und/oder dass
b. die Wickelzähne (3, 11) unterschiedlicher Statorkernsegmente (1, 6) axial gleich lang ausgebildet sind, und/oder dass
c. die Wickelzähne (3, 11) unterschiedlicher Statorkernsegmente (1, 6) axial voneinander beabstandet sind, und/oder dass
d. die Wickelzähne (3, 11) unterschiedlicher Statorkernsegmente (1, 6) axial versetzt zueinander angeordnet sind, und/oder dass
e. die Wickelzähne (3, 11) unterschiedlicher Statorkernsegmente (1, 6) axial unversetzt zueinander angeordnet sind.

4. Statorkern (2) nach einem der Ansprüche 1 bis 3, **dadurch gekennzeichnet, dass**
a. die Statorkernsegmente (1, 6) aus einem paramagnetischen oder ferromagnetischen Material hergestellt sind, und/oder dass
b. die Statorkernsegmente (1, 6) aus Elektroblech hergestellt sind und/oder dass wenigstens eines der Statorkernsegmente (1, 6) mehrere Schichten von Elektroblech aufweist.

5. Statorkern (2) nach einem der Ansprüche 1 bis 4, **dadurch gekennzeichnet, dass**
a. die Statorkernsegmente (1, 6) derart angeordnet sind, dass der Übertrag eines magnetischen Flusses von einem Statorkernsegment zu einem anderen Statorkernsegment (1, 6) zumindest reduziert ist, und/oder dass
b. die Statorkernsegmente (1, 6) voneinander beabstandet sind, und/oder dass
c. der Abstand der Statorkernsegmente (1, 6) überall wenigstens 0,5 mm, insbesondere wenigstens 1 mm, beträgt.

6. Statorkern (2) nach einem der Ansprüche 1 bis 5, **dadurch gekennzeichnet, dass**
a. zwischen den Statorkernsegmenten (1, 6) eine Trennvorrichtung (7) angeordnet ist, und/oder dass
b. zwischen den Statorkernsegmenten (1, 6) eine Trennvorrichtung (7) angeordnet ist, die als Trennschicht ausgebildet ist oder mehrere Trennschichten aufweist, und/oder dass
c. zwischen den Statorkernsegmenten (1, 6) eine Trennvorrichtung (7) angeordnet ist, die ein elektrisch nichtleitendes und/oder diamagnetisches Material beinhaltet, und/oder dass
d. zwischen den Statorkernsegmenten (1, 6) eine Trennvorrichtung (7) angeordnet ist, die (7) einen Schichtaufbau aus einem elektrisch nichtleitenden und einem ferromagnetischen oder paramagnetischen Material aufweist, und/oder dass
e. zwischen den Statorkernsegmenten (1, 6) eine Trennvorrichtung (7) angeordnet ist, die eine Dicke im Bereich von wenigsten 0,5 mm, insbesondere von wenigstens 1 mm aufweist, und/oder dass
f. zwischen den Statorkernsegmenten (1, 6) eine Trennvorrichtung (7) angeordnet ist, die als Abstandhalter ausgebildet ist, an dem zumindest zwei Statorkernsegmente (1, 6) unmittelbar anliegen, und/oder dass
g. zwischen den Statorkernsegmenten (1, 6) eine Trennvorrichtung (7) angeordnet ist, die zumindest teilweise aus Elektroisolierpapier, insbesondere aus Elektroisolierpapier, das eine Dicke im Bereich von 0,5 mm bis 3 mm oder eine Dicke von 1 mm aufweist, gebildet ist, und/oder dass
h. die Trennvorrichtung (7) wenigstens ein Kunststoffspritzgussteil, insbesondere wobei das Kunststoffspritzgussteil und wenigstens eines der Statorkernsegmente (1, 6) formschlüssig ineinandergreifen, aufweist.

7. Statorkern (2) nach einem der Ansprüche 1 bis 6, **dadurch gekennzeichnet, dass**
a. die Statorkernsegmente (1, 6) gleich ausgebildet sind, und/oder dass
b. der Statorkern (2) insgesamt eine Anzahl von Wickelzähnen (3, 11) aufweist, die ohne Rest durch 2 und/oder durch 3 teilbar ist, und/oder dass
c. der Statorkern (2) genau 4 oder 6 oder 8 oder 9 oder 12 Wickelzähne (3, 11) aufweist, und/oder dass
d. die Wickelzähne (3, 11) unterschiedlicher Statorkernsegmente (1, 6) in Umfangsrichtung in einer regelmäßigen Reihenfolge, insbesondere abwechselnd, angeordnet sind.

8. Statorkern (2) nach einem der Ansprüche 1 bis 7, **dadurch gekennzeichnet, dass**
a. jedes Statorkernsegment (1, 6) ein Trägerelement (4, 12) aufweist, an dem seine Wickelzähne (3, 11) angeordnet sind, und/oder dass
b. jedes Statorkernsegment (1, 6) ein als Ring ausgebildetes Trägerelement (4, 12) aufweist, an dem seine Wickelzähne (3, 11) angeordnet sind, und/oder dass
c. jedes Statorkernsegment (1, 6) ein Trägerelement (4, 12) aufweist, an dem seine Wickelzähne (3, 11) angeordnet sind, wobei das Trägerelement (4, 12) eines Statorkernsegments (1, 6) axial mit seinen Wickelzähnen (3, 11) und/oder mit den Wickelzähnen (3, 11) eines anderen Statorkernsegments (1, 6) überlappend angeordnet ist, und/oder dass
d. wenigstens ein Statorkernsegment (1, 6) als ein zusammenhängendes Stück ausgebildet ist, das als Ganzes gehandhabt werden kann, oder dass jedes Statorkernsegment als ein zusammenhängendes Stück ausgebildet ist, das als Ganzes gehandhabt werden kann.

9. Stator, der einen Statorkern (2) nach einem der Ansprüche 1 bis 8 aufweist, insbesondere wobei die Wickelzähne (3, 11) jedes Statorkernsegments mit wenigstens einer Spule bewickelt ist und die Spulen unterschiedlicher Statorkernsegmente (1, 6) in unterschiedliche, insbesondere voneinander unabhängige, Schaltungen, insbesondere Sternschaltungen oder Dreiecksschaltungen, integriert sind.

10. Elektromotor, insbesondere Wechsel- oder Drehstrommotor, der einen Statorkern (2) nach einem der Ansprüche 1 bis 8 oder einen Stator nach Anspruch 9 aufweist.

11. Elektromotor, insbesondere Wechsel- oder Drehstrommotor, der einen Stator nach Anspruch 9 und einen Rotor (10) aufweist, wobei der Rotor (10) durch ausschließliches Bestromen der Spulen eines Teils der Statorkernsegmente (1, 6), insbesondere der Spulen eines einzigen Statorkernsegments (1, 6), zur Rotation antreibbar ist, insbesondere wobei der Rotor (10) durch simultanes Bestromen der Spulen mehrerer Statorkernsegmente (1, 6), insbesondere aller Statorkernsegmente (1, 6), zur Rotation antreibbar ist.

12. Antriebssystem beinhaltend einen Elektromotor nach Anspruch 10 oder 11 und wenigstens eine Antriebselektronik, die dazu ausgebildet ist, die Spulen wenigstens eines Statorkernsegments, insbesondere aller Spulen, zu bestromen.

13. Antriebssystem nach Anspruch 12, **dadurch gekennzeichnet, dass**
a. die Antriebselektronik mehrere, insbesondere redundante, Subantriebselektroniken beinhaltet, von denen jede dazu ausgebildet ist, die Spulen wenigstens eines Statorkernsegments zu bestromen, und/oder dass
b. die Antriebselektronik mehrere Subantriebselektroniken beinhaltet, wobei jeweils den Spulen eines Statorkernsegments eine eigene der Subantriebselektroniken zugeordnet ist jedes Statorkernsegment (1, 6) ein Trägerelement (4, 12) aufweist, an dem seine Wickelzähne (3, 11) angeordnet sind, und/oder dass
c. die Antriebselektronik den Elektromotor mittels Pulsbreitenmodulation steuert jedes Statorkernsegment (1, 6) ein Trägerelement (4, 12) aufweist, an dem seine Wickelzähne (3, 11) angeordnet sind, und/oder dass
d. die Antriebselektronik den Elektromotor mit einer Trägerfrequenz im Bereich von 10 kHz bis 150 kHz, insbesondere im Bereich von 50 kHz bis 100 kHz, steuert.

14. Fahrzeug, insbesondere Kraftfahrzeug oder Flugzeug, oder Fahrzeugkomponente, insbesondere Lenkung, ganz insbesondere PKW-Lenkung oder LKW-Lenkung, oder Fahrwerk, das wenigstens einen Elektromotor nach Anspruch 10 oder 11 oder ein Antriebssystem nach Anspruch 12 oder 13 aufweist.

15. Roboter, insbesondere Industrieroboter, oder Robotergelenk beinhaltend wenigstens einen Elektromotor nach Anspruch 10 oder 11 oder ein Antriebssystem nach Anspruch 12 oder 13.
